# EUROPEAN PATENT SPECIFICATION

(11) **EP 4 297 235 B1**
(45) Date of publication and mention of the grant of the patent: **28.01.2026**
(21) Application number: 22909446.1
(22) Date of filing: 09.10.2022
(51) Int. Cl.: H02J 7/00, H02J 9/00

(54) **STATE ADJUSTMENT METHOD FOR ENERGY STORAGE BATTERY, AND RELATED APPARATUS**
ZUSTANDSANPASSUNGSVERFAHREN FÜR EINE ENERGIESPEICHERBATTERIE UND ZUGEHÖRIGE VORRICHTUNG
PROCÉDÉ DE RÉGLAGE D'ÉTAT POUR BATTERIE DE STOCKAGE D'ÉNERGIE, ET APPAREIL ASSOCIÉ

(43) Date of publication of application: 27.12.2023
(73) Proprietor: Shenzhen Ampere Time Digital Energy Technology Co., Ltd., Shenzhen, Guangdong 518100 (CN)
(72) Inventor: LU, Haijun, Shenzhen, Guangdong 518100 (CN); HE, Lixin, Shenzhen, Guangdong 518100 (CN); ZHAO, Menglong, Shenzhen, Guangdong 518100 (CN)
(74) Representative: Santarelli
(86) International application number: PCT/CN2022/124218
(87) International publication number: WO 2023/116128

(56) References cited:
- CN-A- 108 764 056
- CN-A- 112 693 360
- CN-A- 113 889 056
- US-A- 6 072 250
- US-A1- 2013 043 832
- US-A1- 2018 255 172
- US-A1- 2020 350 777
- US-A9- 2019 097 435

## Description

### TECHNICAL FIELD

This disclosure relates to the field of data processing, and in particular, to a method for adjusting a state of an energy-storage battery and a related apparatus.

### BACKGROUND

In present life, the use of electronic devices is embodied in various aspects of life. An energy-storage battery in the electronic device is an essential component. When the energy-storage battery is used, an existing state displaying and adjusting scheme used by the energy-storage battery is that after the energy-storage battery is installed in the electronic device, the use state of the battery usually needs to be adjusted in a more complex way, and can only be switched and adjusted between stationary states, resulting in relatively low convenience of using the energy-storage battery.
US2019/097435A9 relates to a battery system. The battery system includes a battery pack and a battery management system, the battery system having output battery terminals, a method and apparatus for preventing inadvertent connection and disconnection the output battery terminals from the battery pack is disclosed.
US2018/255172A1 relates to an electronic device. The electronic device includes an push button, a fingerprint sensor configured to detect a fingerprint of a finger contacting the push button, and a controller configured to release a locked state when it is determined that the push button has been pressed and that the fingerprint detected by the fingerprint sensor matches preregistered fingerprint information.

### SUMMARY

The invention is defined by the independent claims. A method for adjusting a state of an energy-storage battery and a related apparatus are provided in implementations of the present disclosure, which can adjust the state of the energy-storage battery according to touch information input through a battery-state-adjustment button, thereby improving the convenience of adjusting the state of the energy-storage battery.

Implementations of the present disclosure are implemented to achieves at least following beneficial effects. By receiving the touch information input by the user through the battery-state-adjustment button, determining the state-adjustment information of the energy-storage battery according to the touch information, performing the state adjustment on the energy-storage battery according to the state-adjustment information to obtain the target state adjusted, and displaying the target state by the display module in the electronic apparatus, the state of the energy-storage battery can be adjusted by the touch information input through the battery-state-adjustment button, thereby improving the convenience of adjusting the state of the energy-storage battery.

### BRIEF DESCRIPTION OF THE DRAWINGS

FIG. 1 is a schematic flowchart of a method for adjusting a state of an energy-storage battery provided in an implementation of the present disclosure.
FIG. 2 is a schematic flowchart of a method for adjusting a state of an energy-storage battery provided in another implementation of the present disclosure.
FIG. 3 is a schematic structural diagram of a terminal provided in an implementation of the present disclosure.
FIG. 4 is a schematic structural diagram of a state-adjustment apparatus for an energy-storage battery provided in an implementation of the present disclosure.

### DETAILED DESCRIPTION

The following will clearly and completely describe technical solutions of implementations of the present disclosure with reference to the accompanying drawings. Apparently, implementations described herein are merely some implementations, rather than all implementations. Based on the implementations of the present disclosure, all other implementations obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "implementation" referred to herein means that particular features, structures, or properties described in conjunction with implementations may be defined in at least one implementation of the present disclosure. The phrase "implementation" appearing in various places in the specification does not necessarily refer to the same implementation or an independent/alternative implementation that is mutually exclusive with other implementations. Those skilled in the art will understand expressly and implicitly that an implementation described in the present disclosure may be combined with other implementations.

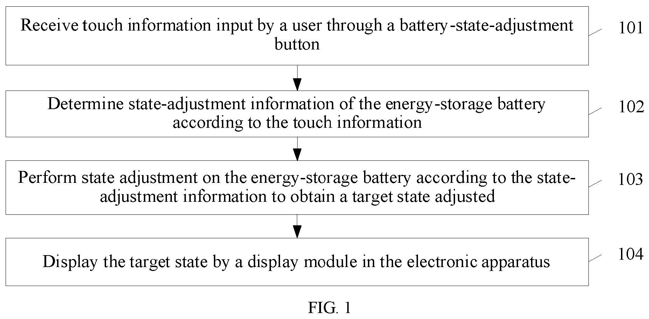

Referring to FIG. 1, FIG. 1 is a schematic flowchart of a method for adjusting a state of an energy-storage battery provided in an implementation of the present disclosure. As shown in FIG. 1, the method is applied to an electronic apparatus. The electronic apparatus includes a battery-state-adjustment button. The method includes the following.

101: touch information input by a user through the battery-state-adjustment button is received.

The user inputs the touch information by pressing and touching the battery-state-adjustment button. A corresponding battery-state-adjustment button is disposed in the electronic apparatus. The battery-state-adjustment button may be an ordinary button for battery state adjustment, of course, the battery-state-adjustment button may also include a button that can be used for fingerprint recognition. If the battery-state-adjustment button can be used for fingerprint recognition, the battery-state-adjustment button collects the fingerprint information of the user, so that the electronic apparatus recognizes the identity information of the user, and the like. Of course, the battery-state-adjustment button may further include a voice recognition function, which is used for carrying out voice recognition on the user, so that the state-adjustment information of the energy-storage battery can be obtained by voice. At this point, if voice recognition is enabled, the state-adjustment information of the energy-storage battery can also be jointly determined by collecting both the touch information of the user and the voice information of the user.

The touch information includes touch duration and touch frequency. Of course, a multi-battery-state-adjustment button can be used for fingerprint recognition, then the touch information further includes fingerprint information.

102: state-adjustment information of the energy-storage battery is determined according to the touch information.

The state-adjustment information can be determined according to the touch duration and the touch frequency in the touch information, or the state-adjustment information can be determined according to the touch duration, the touch frequency, and the fingerprint information in the touch information. Of course, the state-adjustment information can also be determined according to the touch information and the voice information, and the like.

When the state-adjustment information is determined according to the touch information and the voice information, the state-adjustment information can be respectively determined by each of the voice information and the touch information, and final state-adjustment information of the energy-storage battery can be obtained through mutual verification.

103: state adjustment is performed on the energy-storage battery according to the state-adjustment information to obtain a target state adjusted.

A present state parameter of the energy-storage battery is adjusted according to the state-adjustment information to achieve the state adjustment of the energy-storage battery, so as to obtain the target state adjusted. The states of energy-storage battery may include a normal use state, a sleep state, a low-temperature charging protection state, a shutdown state, a to-be-charged state, and the like.

104: the target state is displayed by a display module in the electronic apparatus.

The display module in the electronic apparatus may be a state-display lamp. Since the electronic apparatus using the energy-storage battery may not necessarily have a display screen and the like, displaying the target state through the state-display lamp can greatly improve the convenience. At the same time, there is one state-display lamp used for displaying the state of the energy-storage battery in the electronic apparatus, and therefore, by controlling one state-display lamp to display the state of the energy-storage battery, the user experience is improved while the battery state recognizability is simplified, and the cost of the battery is reduced and the usage time of the battery is prolonged.

In this example, by receiving the touch information input by the user through the battery-state-adjustment button, determining the state-adjustment information of the energy-storage battery according to the touch information, performing the state adjustment on the energy-storage battery according to the state-adjustment information to obtain the target state adjusted, and displaying the target state by the display module in the electronic apparatus, the state of the energy-storage battery can be adjusted by the touch information input through the battery-state-adjustment button, thereby improving the convenience of adjusting the state of the energy-storage battery.

In one possible implementation, a possible method for determining the state-adjustment information of the energy-storage battery according to the touch information includes the following.

A1: touch duration and touch frequency in the touch information are obtained.

A2: first state-adjustment sub-information is determined according to the touch duration.

A3: second state-adjustment sub-information is determined according to the touch frequency.

A4: parameter integration processing is performed on the first state-adjustment sub-information and the second state-adjustment sub-information to obtain the state-adjustment information of the energy-storage battery.

Different touch duration corresponds to different state-adjustment information, and thus, the first state-adjustment sub-information is determined according to the touch duration. Different touch frequency corresponds to different state-adjustment information, and thus, the second state-adjustment sub-information is determined according to the touch frequency.

The method of performing the parameter integration processing on the first state-adjustment sub-information and the second state-adjustment sub-information to obtain the state-adjustment information of the energy-storage battery includes the following. The first state-adjustment sub-information and the second state-adjustment sub-information are merged to obtain the state-adjustment information of the energy-storage battery. Specifically, it can be understood that the state-adjustment information of the energy-storage battery includes the first state-adjustment sub-information and the second state-adjustment sub-information.

In this example, determining the state-adjustment information of the energy-storage battery according to the touch duration and the touch frequency can improve the convenience of determining the state-adjustment information of the energy-storage battery.

In one possible implementation, another possible method of determining the state-adjustment information of the energy-storage battery according to the touch information includes the following.

B1: a touch fingerprint in the touch information is obtained.

B2: user information of the user is determined according to the touch fingerprint.

B3: a battery-state-adjustment level corresponding to the user information is obtained.

B4: third state-adjustment sub-information is determined according to the battery-state-adjustment level.

B5: touch duration and touch frequency in the touch information are obtained.

B6: fourth state-adjustment sub-information is determined according to the touch duration and the touch frequency.

B7: parameter integration processing is performed on the third state-adjustment sub-information and the fourth state-adjustment sub-information to obtain the state-adjustment information of the energy-storage battery.

The state-adjustment button collects the fingerprint information of the user, and therefore, the touch information includes the touch fingerprint. The user information can be determined according to the touch fingerprint, such as the identity information of the user. Each user has his/her corresponding battery-state-adjustment level. Specifically, for example, the user can apply for the battery-state-adjustment level in advance in the electronic apparatus. Different battery-state-adjustment levels correspond to different adjustment permissions, and different adjustment permissions correspond to different state adjustment capabilities. The state adjustment capability can be understood as the adjustment range when adjusting the state of the energy-storage battery. For example, an administrator may have the adjustment permission corresponding to the highest battery-state-adjustment level, and an ordinary user may have his/her corresponding adjustment permission. Specifically, when the user performs state adjustment, if the state adjustment level of the user only corresponds to adjusting the state of the energy-storage battery from the sleep state to the normal use state, then the user cannot adjust the state of the energy-storage battery from the normal use state to the sleep state, and the like. Of course, the above is only an illustration, and in the actual adjustment, it may also be a specific state fine-adjustment parameter, for example, the normal use state includes multiple use modes, different use modes correspond to different power, and thus, it may also be the adjustment of the use modes.

The method of determining the fourth state-adjustment sub-information according to the touch duration and the touch frequency in the touch information may refer to the method of determining the state-adjustment information in the previous implementations, which will not be repeated here.

The method of performing the parameter integration processing on the third state-adjustment sub-information and the fourth state-adjustment sub-information to obtain the state-adjustment information of the energy-storage battery includes the following. The intersection of the third state-adjustment sub-information and the fourth state-adjustment sub-information can be determined as the state-adjustment information of the energy-storage battery. Since the third state-adjustment sub-information is a permission adjustment parameter owned by the user, the state-adjustment information of the energy-storage battery must be a subset of the third sub- state adjustment information. Therefore, after the state-adjustment information is determined according to the touch duration and the touch frequency of the user that are collected, limiting is performed according to the permission adjustment parameter of the user, so as to avoid the situation that the user randomly adjusts the state of the energy-storage battery resulting in that the electronic apparatus cannot operate properly, and the reliability of state adjustment is improved.

In one specific implementation, the energy-storage battery can be applied to an electric vehicle. When the energy-storage battery is applied to the electric vehicle, after the state-adjustment information of the energy-storage battery is determined according to the touch information, the state-adjustment information can also be corrected, for example, the state-adjustment information can be corrected in combination with the state information of the electric vehicle, which specifically includes the following.

C1: state information of an electric vehicle is obtained.

C2: mode information of the electric vehicle is determined according to the state information of the electric vehicle.

C3: electricity demand information of the electric vehicle is determined according to the mode information.

C4: first correction sub-information is determined according to the electricity demand information.

C5: application information and running state of a presently running application program of the electric vehicle is obtained.

C6: second correction sub-information is determined according to the application information and the running state.

C7: target correction information is determined according to the first correction sub-information and the second correction sub-information.

C8: the state-adjustment information is adjusted according to the target correction information to obtain the state-adjustment information adjusted.

The state information of the electric vehicle may include the running state, traveling state, and the like of the electric vehicle. The state information specifically may include whether the electric vehicle is traveling on the road, whether the electric vehicle is started, and the like. Thus, the mode information can be determined according to the state information, and different states may correspond to different modes. For example, the mode corresponding to the traveling state may be a driving mode, the mode corresponding to a state that the electric vehicle is only started but not traveling may be a start non-driving mode, and the mode corresponding to a non-start state may be a non-start mode. Of course, there may also be other modes, which are only illustrations here.

The electric vehicle has different electricity demands in different modes. For example, in the non-start mode, the electricity demand of the electric vehicle will be relatively low, and usually only some standby devices, such as the starting device, in the electric vehicle will have the electricity demand. In the driving mode, the electricity demand will be higher, and there is also a state of whether to turn on an air conditioner or not. In the state that the air conditioner is turned on, the electricity demand will be higher. Thus, the correction information can be determined according to the electricity demand information determined by the mode information. The higher the electricity demand indicated by the electricity demand information, the higher the correction information and the greater the correction strength. Specifically, it can be understood that for example, in the driving mode, the state-adjustment information of the battery can indicate to adjust the state of the battery to a high-power discharge state, but the discharge power of the battery is a fixed value. At this point, the discharge power can be corrected according to the adjustment information. The higher the electricity demand, the greater the adjusted discharge power and the greater the correction strength.

The application information and the running state of the presently running application program of the electric vehicle can be understood as: the application information can characterize the attributes of the application program, such as name, size of memory occupied, and range of memory space required during runtime. The running state may include normal running, standby, overloaded running, and the like., and can be characterized by the size of running memory required during runtime.

Different application programs will require different electric quantities to run, and electric quantities required by the application program in different states may vary. Different running states can correspond to different second correction sub-information, and different application programs can correspond to different second correction sub-information. Therefore, the second correction sub-information can be determined according to the attribute information and the running state of a running program, and the union of the first correction sub-information and the second correction sub-information can be determined as the target correction information. The target correction information can be superimposed into the state-adjustment information to obtain the adjusted state-adjustment information, or the target correction information and the state-adjustment information can be weighted, and the information weighted is determined as the state-adjustment information adjusted.

In this example, the target correction information of the state-adjustment information is determined by the state information of the electric vehicle, and the application information and the running state of the presently running application program. The state-adjustment information is adjusted according to the target correction information to obtain the state-adjustment information adjusted, thereby improving the accuracy of obtaining the state-adjustment information.

In one specific implementation, the energy-storage battery can be applied to a projector. The projector is used for outdoor projection. After the state-adjustment information of the energy-storage battery is determined according to the touch information, the state-adjustment information can also be corrected, for example, the state-adjustment information can be corrected in combination with the state information of the projector, which specifically includes the following.

D1: state information and present environmental information of the projector are obtained.

D2: first electricity-consumption-demand information of the projector is obtained if the state information is preset state information.

D3: first electricity-consumption-demand-adjustment information is determined according to the present environmental information.

D4: the first electricity-consumption-demand information is adjusted according to the first electricity-consumption-demand-adjustment information to obtain second electricity-consumption-demand information.

D5: action information of a target user using the projector is obtained;

D6: second electricity-consumption-demand-adjustment information is determined according to the action information.

D7: the second electricity-consumption-demand information is adjusted according to the second electricity-consumption-demand-adjustment information to obtain target electricity-consumption-demand information.

D8: correction information is determined according to the target electricity-consumption-demand information.

D9: the state-adjustment information is adjusted according to the correction information to obtain state-adjustment information adjusted.

The projector may have multiple states, such as a projection state, a standby state, and a shutdown state. The present environmental information can be understood as the external environment where the projector is located, such as daytime, night, sunset, lawn, lakeside, and outdoor stage.

Here is to address the state adjustment of the energy-storage battery during projection of the projector. Therefore, the preset state information may be the state information indicated by the projection state, and different states have different electricity demand information. At the same time, when the projector is in the preset state, its electricity-consumption-demand information can be predetermined.

The first electricity-consumption-demand-adjustment information can be determined according to the present environmental information. Due to the influence of the environment on an image projected in different environments, the projector will employ different projection ways under different environments to adapt to the present environment. Therefore, the projection power of the projector may vary, then the first electricity-consumption-demand-adjustment information can be determined according to the environmental information.

The method of adjusting the first electricity-consumption-demand information according to the first electricity-consumption-demand-adjustment information to obtain the second electricity-consumption-demand information may include the following. The first electricity-consumption-demand-adjustment information and the first electricity-consumption-demand information are superimposed to obtain the second electricity-consumption-demand information. The method of superimposition may be direct parameter superimposition processing, and the like.

Different users may have different levels of proficiency when using the projector. Therefore, the use proficiency of the user can be determined according to the action information, and the second electricity-consumption-demand-adjustment information can be determined according to the proficiency. The proficiency determination method may be that the action information is compared with preset action information to obtain a similarity, and the proficiency is determined according to the similarity. The higher the similarity, the higher the proficiency, and the lower the similarity, the lower the proficiency. The higher proficiency of the user during operation, the fewer the actions for adjustment during operation, resulting in a decrease in electricity consumption, and therefore, the second electricity-consumption-demand-adjustment information can be determined according to the proficiency. The higher the proficiency, the smaller the adjustment strength of the second electricity-consumption-demand-adjustment information; and the lower the proficiency, the greater the adjustment strength of the second electricity-consumption-demand-adjustment information.

The method of adjusting the second electricity-consumption-demand information according to the second electricity-consumption-demand-adjustment information to obtain the target electricity-consumption-demand information may refer to the method of adjusting the first electricity-consumption-demand information according to the first electricity-consumption-demand-adjustment information to obtain the second electricity-consumption-demand information.

The correction information can be superimposed into the state-adjustment information to obtain the state-adjustment information adjusted, or the correction information and the state-adjustment information can be weighted, and the information weighted is determined as the state-adjustment information adjusted.

**In** this example, the correction information of the state-adjustment information is determined by the state information of the projector, the present environmental information, and the action information of the user. The state-adjustment information is adjusted according to the correction information to obtain the state-adjustment information adjusted, thereby improving the accuracy of obtaining the state-adjustment information.

**In** one possible implementation, the display module includes a state-display lamp, and a possible method of displaying the target state by the display module in the electronic apparatus includes the following.

E1: display color and flickering frequency of the state-display lamp are determined according to the target state.

E2: the state-display lamp is controlled according to the display color and the flickering frequency to display the target state.

Different states correspond to different display color and flickering frequency, and therefore, the display color and the flickering frequency of the state display light can be determined according to the target state.

**In** this example, by controlling one state-display lamp to display the state of the energy-storage battery, the user experience is improved while the battery state recognizability is simplified, and the cost of the battery is reduced and the usage time of the battery is prolonged.

In one possible implementation, the service life of the energy-storage battery can also be displayed, which specifically includes the following.

F1: usage information of the energy-storage battery is obtained.

F2: a state parameter of the energy-storage battery is determined according to the usage information.

F3: a display parameter of the state-display lamp is determined according to the state parameter.

F4: the state-display lamp is adjusted according to the display parameter to indicate the state parameter of the energy-storage battery.

The usage information may include the usage duration and the usage frequency of the energy-storage battery, and the state parameter of the energy-storage battery may include the remaining service life and the like. The remaining service life of the energy-storage battery can be determined according to the usage duration and the usage frequency.

Different remaining service lives can correspond to different display parameters of the state-display lamp. For example, the display parameter of the state-display lamp may be a parameter that periodically displays the remaining service life. Specifically, for example, for a service-life time period of the remaining service life, the display parameter may be the color information and the flickering frequency of a corresponding stage.

In this example, service-life time periods of different remaining service lives correspond to different color information and flickering frequency, which can improve the convenience of managing the energy-storage battery.

In one specific implementation, a specific method for controlling the state-display lamp for state display is further provided in implementations of the present disclosure. Specifically, the state of the display lamp indicates the present state of the battery, and the display lamp can be controlled to display green, orange, and red respectively.

Solid green: inform the user that the battery is in a normal state and can be used normally.

Flickering green: inform the user that the battery is in a low battery state and needs to be recharged.

Solid orange: inform the user that the battery has triggered abnormal protection and needs to be protected, and troubleshoot is required.

Flickering orange: inform the user that the battery ends in service life and needs to be replaced.

Solid red: inform the user that the battery has triggered a cell-and-voltage abnormal fault or end-of-life fault, and troubleshoot is required.

Flickering red: inform the user that the battery has triggered a battery failure fault and needs to be stopped, and troubleshoot is required.

The state can also be adjusted by controlling the state adjustment button, which specifically includes the following.

Button short press: the user can power on the battery or activate a battery in sleep by short pressing the button.

Button long press: the user powers off the battery by long pressing the button.

Continuous short press: after the user short presses the button, low-temperature charging protection can be canceled after the short press of the button again within 5 seconds, so that the battery can be charged normally.

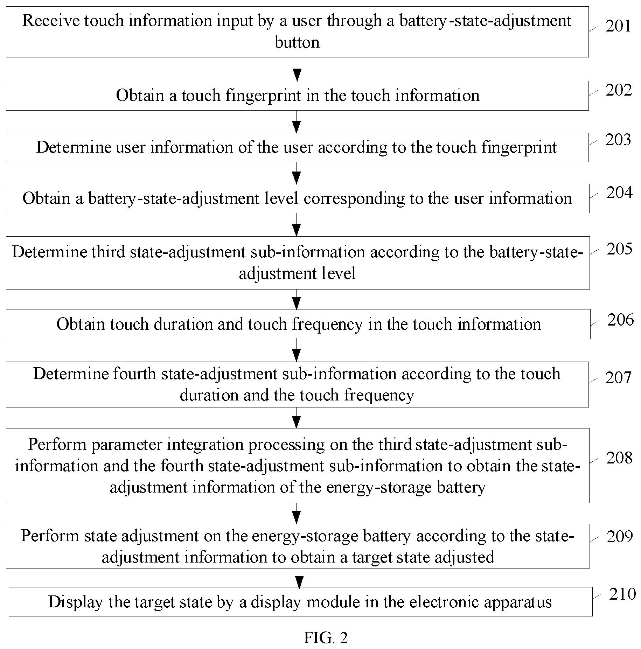

Referring to FIG. 2, FIG. 2 is a schematic flowchart of a method for adjusting a state of an energy-storage battery provided in another implementation of the present disclosure. As shown in FIG. 2, the method is applied to an electronic apparatus, the electronic apparatus includes a battery-state-adjustment button, and the method includes the following.

201: touch information input by a user through the battery-state-adjustment button is received.

202: a touch fingerprint in the touch information is obtained.

203: user information of the user is determined according to the touch fingerprint.

204: a battery-state-adjustment level corresponding to the user information is obtained.

205: third state-adjustment sub-information is determined according to the battery-state-adjustment level.

206: touch duration and touch frequency in the touch information are obtained.

207: fourth state-adjustment sub-information is determined according to the touch duration and the touch frequency.

208: parameter integration processing is performed on the third state-adjustment sub-information and the fourth state-adjustment sub-information to obtain state-adjustment information of the energy-storage battery.

209: state adjustment is performed on the energy-storage battery according to the state-adjustment information to obtain a target state adjusted.

210: the target state is displayed by a display module in the electronic apparatus.

In this example, after the state-adjustment information is determined according to the collected touch duration and touch frequency of the user, limiting is performed according to a permission adjustment parameter of the user, so as to avoid the situation that the user randomly adjusts the state of the energy-storage battery resulting in that the electronic apparatus cannot operate properly, and the reliability of state adjustment is improved.

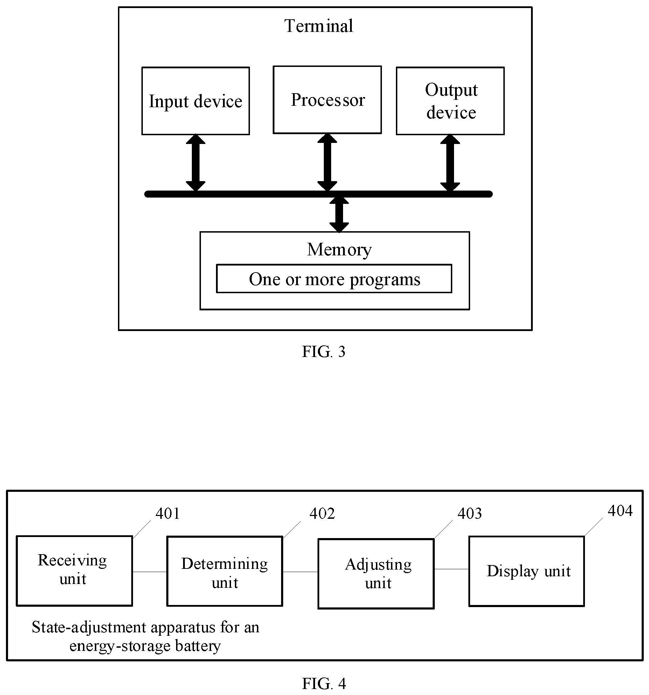

Consistent with the above implementations, referring to FIG. 3, FIG. 3 is a schematic structural diagram of a terminal provided in an implementation of the present disclosure. As shown, the terminal includes a processor, an input device, an output device, and a memory. The processor, the input device, the output device, and the memory are connected to one another. The memory is configured to store a computer program, and the computer program includes program instructions. The processor is configured to invoke the program instructions. The program includes instructions for executing the following. Touch information input by a user through the battery-state-adjustment button is received; state-adjustment information of the energy-storage battery is determined according to the touch information; state adjustment is performed on the energy-storage battery according to the state-adjustment information to obtain a target state adjusted; and the target state is displayed by a display module in the electronic apparatus.

The solution of the embodiment of the present disclosure is introduced above mainly from the perspective of the execution process of the method. It can be understood that in order to achieve the above functions, the terminal includes corresponding hardware structures and/or software modules to execute each function. A person skilled in the art should easily realize that in combination with the units and algorithm steps of each example described in the embodiments provided herein, the present disclosure may be implemented in hardware or a combination of hardware and computer software. Whether a certain function is executed in a mode of hardware or computer software driven hardware depends on particular applications and design constraint conditions of the technical solutions. A person skilled in the art can use different methods to implement the described functions for each particular application, but it should not be considered that the implementation goes beyond the scope of the present disclosure.

In implementations of the present disclosure, the terminal can be divided into functional units according to the above method examples. For example, each functional unit can be divided according to each function, and two or more functions can be integrated into one processing unit. The forgoing integrated unit may be implemented in the form of hardware, or may be implemented in a form of a software functional unit. It is to be noted that the division of units in implementations of the present disclosure is schematic and only serves as a logical functional division. In actual implementation, there may be other division ways.

Consistent with the above, referring to FIG. 4, FIG. 4 is a schematic structural diagram of a state-adjustment apparatus for an energy-storage battery provided in an implementation of the present disclosure. As shown in FIG. 4, the apparatus is applied to an electronic apparatus, the electronic apparatus includes a battery-state-adjustment button, and the apparatus includes a receiving unit 401, a determining unit 402, an adjusting unit 403, and a display unit 404. The receiving unit 401 is configured to receive touch information input by a user through the battery-state-adjustment button. The determining unit 402 is configured to determine state-adjustment information of the energy-storage battery according to the touch information. The adjusting unit 403 is configured to perform state adjustment on the energy-storage battery according to the state-adjustment information to obtain a target state adjusted. The display unit 404 is configured to display the target state by a display module in the electronic apparatus.

In one possible implementation, the determining unit 402 is configured to obtain touch duration and touch frequency in the touch information; determine first state-adjustment sub-information according to the touch duration; determine second state-adjustment sub-information according to the touch frequency; and perform parameter integration processing on the first state-adjustment sub-information and the second state-adjustment sub-information to obtain the state-adjustment information of the energy-storage battery.

In one possible implementation, the determining unit 402 is configured to obtain a touch fingerprint in the touch information; determine user information of the user according to the touch fingerprint; obtain a battery-state-adjustment level corresponding to the user information; determine third state-adjustment sub-information according to the battery-state-adjustment level; obtain touch duration and touch frequency in the touch information; determine fourth state-adjustment sub-information according to the touch duration and the touch frequency; and perform parameter integration processing on the third state-adjustment sub-information and the fourth state-adjustment sub-information to obtain the state-adjustment information of the energy-storage battery.

In one possible implementation, the display module includes a state-display lamp, and the display unit 404 is configured to determine display color and flickering frequency of the state-display lamp according to the target state; and control the state-display lamp according to the display color and the flickering frequency to display the target state.

In one possible implementation, the apparatus is further configured to obtain usage information of the energy-storage battery; determine a state parameter of the energy-storage battery according to the usage information; determine a display parameter of the state-display lamp according to the state parameter; and adjust the state-display lamp according to the display parameter to indicate the state parameter of the energy-storage battery.

A computer storage medium is further provided in implementations of the present disclosure. The computer storage medium stores a computer program for electronic data interchange, and the computer program causes a computer to execute some or all of the steps of any method for adjusting the state of the energy-storage battery as recorded in the above method implementations.

A computer program product is further provided in implementations of the present disclosure. The computer program product includes a non-transient computer-readable storage medium storing a computer program, and the computer program causes a computer to execute some or all of the steps of any method for adjusting the state of the energy-storage battery as recorded in the above method implementations.

It is to be noted that for each of the foregoing method implementations, for ease of description, the method implementation is described as a series of action combinations, but a person skilled in the art should learn that the present disclosure is not limited by the order of described actions, because according to the present disclosure, some steps may be performed in another order or simultaneously. In addition, a person skilled in the art should also know that all the implementations described in this specification are preferred implementations, and the related actions and modules are not necessarily required in the present disclosure.

In the foregoing implementations, the descriptions of the implementations have respective focuses. For a part that is not described in detail in an implementation, reference can be made to related descriptions in other implementations.

In the several implementations provided in the present disclosure, it is to be understood that, the disclosed apparatus may be implemented in other manners. For example, the described apparatus implementations are merely schematic. For example, the unit division is merely logical function division and may be other division in actual implementation. For example, multiple units or components may be combined or integrated into another system, or some features may be ignored or not performed. From another point, the displayed or discussed mutual coupling or direct coupling or communication connection may be implemented via some interfaces. The indirect coupling or communication connection between apparatuses or units may be implemented in electrical or other forms.

The units described as separate components may or may not be physically separated, and the components displayed as units may or may not be physical units, and may be located in one place or may be distributed over multiple of network units. Some or all of the units may be selected according to actual needs to achieve the objectives of the solutions of the implementations.

In addition, each functional unit in each implementation of the present disclosure may be integrated into one processing unit, or may be physically present alone, or two or more units may be integrated into one unit. The integrated unit may be implemented in the form of hardware, or may be implemented in a form of a software program module.

When implemented in the form of the software program module and sold or used as an independent product, the integrated unit may be stored in a computer-readable memory. Based on such an understanding, the technical solutions of the present disclosure essentially, or the part contributing to the prior art, or all or some of the technical solutions may be embodied in a form of a software product. The computer software product is stored in a memory and includes several instructions to enable a computer device (which may be a personal computer, a server, a network device, or the like) to perform all or some of the steps of the methods described in the implementations of the present disclosure. The aforementioned memory includes: various media that can store program codes, such as a USB flash disk, a read-only memory (ROM), a random access memory (RAM), a mobile hard disk, a magnetic disk, or an optical disc.

A person of ordinary skill in the art may understand that all or some steps of the various methods in the foregoing implementations may be implemented by the program through instructing related hardware, and the program may be stored in a computer-readable memory. The memory may include: a flash disk, a read-only memory, a random access memory, a magnetic disk, or an optical disk, and the like.

The implementations of the present disclosure are introduced above in details. The principles and implementations of the present disclosure are described by using specific examples herein, the descriptions of the foregoing implementations are merely intended to help understand the method and the core idea of the method of the present disclosure; at the same time, for a person of ordinary skill in the art, there will be changes in the specific implementations and application scope based on the ideas of the present disclosure. In summary, the content of this specification should not be construed as a limitation of the present disclosure.

## Claims

1. A method for adjusting a state of an energy-storage battery, wherein the method is applied to an electronic apparatus, the electronic apparatus comprises a battery-state-adjustment button, and the method comprises:
receiving (201) touch information input by a user through the battery-state-adjustment button;
obtaining (202) a touch fingerprint in the touch information;
determining (203) user information of the user according to the touch fingerprint;
obtaining (204) a battery-state-adjustment level corresponding to the user information;
determining (205) third state-adjustment sub-information according to the battery-state-adjustment level, wherein the third state-adjustment sub-information is a permission adjustment parameter owned by the user;
obtaining (206) touch duration and touch frequency in the touch information;
determining (207) fourth state-adjustment sub-information according to the touch duration and the touch frequency;
determining (208) an intersection of the third state-adjustment sub-information and the fourth state-adjustment sub-information as state-adjustment information of the energy-storage battery;
performing (209) state adjustment on the energy-storage battery according to the state-adjustment information to obtain a target state adjusted; and
displaying (210) the target state by a display module in the electronic apparatus.

2. The method of claim 1, wherein the display module comprises a state-display lamp, and displaying (210) the target state by the display module in the electronic apparatus comprises:
determining display color of the state-display lamp and flickering frequency of the state-display lamp according to the target state; and
controlling the state-display lamp according to the display color and the flickering frequency to display the target state.

3. The method of claim 2, further comprising:
obtaining usage information of the energy-storage battery;
determining a state parameter of the energy-storage battery according to the usage information;
determining a display parameter of the state-display lamp according to the state parameter; and
adjusting the state-display lamp according to the display parameter to indicate the state parameter of the energy-storage battery.

4. A terminal comprising a processor, an input device, an output device, and a memory, the processor, the input device, the output device, and the memory being connected to one another, wherein the memory is configured to store a computer program, the computer program comprises program instructions, and the processor is configured to invoke the program instructions to execute:
receiving (201) touch information input by a user through a battery-state-adjustment button;
obtaining (202) a touch fingerprint in the touch information;
determining (203) user information of the user according to the touch fingerprint;
obtaining (204) a battery-state-adjustment level corresponding to the user information;
determining (205) third state-adjustment sub-information according to the battery-state-adjustment level, wherein the third state-adjustment sub-information is a permission adjustment parameter owned by the user;
obtaining (206) touch duration and touch frequency in the touch information;
determining (207) fourth state-adjustment sub-information according to the touch duration and the touch frequency;
determining (208) an intersection of the third state-adjustment sub-information and the fourth state-adjustment sub-information as state-adjustment information of the energy-storage battery;
performing (209) state adjustment on the energy-storage battery according to the state-adjustment information to obtain a target state adjusted; and
displaying (210) the target state by a display module in the electronic apparatus.

5. The terminal of claim 4, wherein the display module comprises a state-display lamp, and in terms of displaying the target state by the display module in the electronic apparatus, the processor is further configured to invoke the program instructions to execute:
determining display color of the state-display lamp and flickering frequency of the state-display lamp according to the target state; and
controlling the state-display lamp according to the display color and the flickering frequency to display the target state.

6. The terminal of claim 5, the processor is further configured to invoke the program instructions to execute:
obtaining usage information of the energy-storage battery;
determining a state parameter of the energy-storage battery according to the usage information;
determining a display parameter of the state-display lamp according to the state parameter; and
adjusting the state-display lamp according to the display parameter to indicate the state parameter of the energy-storage battery.

7. A computer-readable storage medium, wherein the computer-readable storage medium stores a computer program, the computer program comprises program instructions, and the program instructions, when executed by a processor, cause the processor to execute:
receiving (201) touch information input by a user through a battery-state-adjustment button;
obtaining (202) a touch fingerprint in the touch information;
determining (203) user information of the user according to the touch fingerprint;
obtaining (204) a battery-state-adjustment level corresponding to the user information;
determining (205) third state-adjustment sub-information according to the battery-state-adjustment level, wherein the third state-adjustment sub-information is a permission adjustment parameter owned by the user;
obtaining (206) touch duration and touch frequency in the touch information;
determining (207) fourth state-adjustment sub-information according to the touch duration and the touch frequency;
determining (208) an intersection of the third state-adjustment sub-information and the fourth state-adjustment sub-information as state-adjustment information of the energy-storage battery;
performing (209) state adjustment on the energy-storage battery according to the state-adjustment information to obtain a target state adjusted; and
displaying (210) the target state by a display module in the electronic apparatus.

8. The computer-readable storage medium of claim 7, wherein the display module comprises a state-display lamp, and in terms of displaying the target state by the display module in the electronic apparatus, the program instructions, when executed by the processor, further cause the processor to execute:
determining display color of the state-display lamp and flickering frequency of the state-display lamp according to the target state; and
controlling the state-display lamp according to the display color and the flickering frequency to display the target state.

9. The computer-readable storage medium of claim 8, the program instructions, when executed by the processor, further cause the processor to execute:
obtaining usage information of the energy-storage battery;
determining a state parameter of the energy-storage battery according to the usage information;
determining a display parameter of the state-display lamp according to the state parameter; and
adjusting the state-display lamp according to the display parameter to indicate the state parameter of the energy-storage battery.

## Patentansprüche

1. Verfahren zum Angleichen eines Zustands einer Energiespeicherbatterie, wobei das Verfahren auf eine elektronische Einrichtung angewendet wird, die elektronische Einrichtung eine Batteriezustandsangleichstaste umfasst, und das Verfahren Folgendes umfasst:
Empfangen (201) von Berührungsinformationen, die von einem Benutzer über die Batteriezustandsangleichstaste eingegeben werden;
Erhalten (202) eines Berührungsfingerabdrucks in den Berührungsinformationen;
Bestimmen (203) von Benutzerinformationen des Benutzers gemäß dem Berührungsfingerabdruck;
Erhalten (204) eines Batteriezustandsangleichniveaus, das den Benutzerinformationen entspricht;
Bestimmen (205) einer dritten Zustandsangleichsunterinformation gemäß dem Batteriezustandsangleichniveau, wobei die dritte Zustandsangleichunterinformation ein Berechtigungsangleichsparameter ist, der dem Benutzer gehört;
Erhalten (206) von Berührungsdauer und Berührungsfrequenz in den Berührungsinformationen;
Bestimmen (207) einer vierten Zustandsangleichsunterinformation gemäß der Berührungsdauer und der Berührungsfrequenz;
Bestimmen (208) eines Schnittpunkts der dritten Zustandsangleichsunterinformation und der vierten Zustandsangleichsunterinformation als Zustandsangleichsinformation der Energiespeicherbatterie;
Durchführen (209) einer Zustandsangleichung an der Energiespeicherbatterie gemäß den Zustandsangleichsinformationen, um einen angeglichenen Zielzustand zu erhalten; und
Anzeigen (210) des Zielzustands durch ein Anzeigemodul in der elektronischen Einrichtung.

2. Verfahren nach Anspruch 1, wobei das Anzeigemodul eine Zustandsanzeigelampe umfasst und das Anzeigen (210) des Zielzustands durch das Anzeigemodul in der elektronischen Einrichtung Folgendes umfasst:
Bestimmen der Anzeigefarbe der Zustandsanzeigelampe und der Blinkfrequenz der Zustandsanzeigelampe gemäß dem Zielzustand; und
Steuern der Statusanzeigelampe gemäß der Anzeigefarbe und der Blinkfrequenz zur Anzeige des Zielzustands.

3. Verfahren nach Anspruch 2, ferner umfassend:
Erhalten von Nutzungsinformationen der Energiespeicherbatterie;
Bestimmen eines Zustandsparameters der Energiespeicherbatterie gemäß den Nutzungsinformationen;
Bestimmen eines Anzeigeparameters der Zustandsanzeigelampe gemäß dem Zustandsparameter; und
Angleichen der Zustandsanzeigelampe gemäß dem Anzeigeparameter, um den Zustandsparameter der Energiespeicherbatterie anzuzeigen.

4. Terminal, das einen Prozessor, eine Eingangsvorrichtung, eine Ausgangsvorrichtung und einen Speicher umfasst, wobei der Prozessor, die Eingangsvorrichtung, die Ausgangsvorrichtung und der Speicher miteinander verbunden sind, wobei der Speicher so konfiguriert ist, dass er ein Computerprogramm speichert, das Computerprogramm Programmanweisungen umfasst, und der Prozessor so konfiguriert ist, dass er die Programmanweisungen aufruft, um Folgendes auszuführen:
Empfangen (201) von Berührungsinformationen, die von einem Benutzer über eine Batteriezustandsangleichstaste eingegeben werden;
Erhalten (202) eines Berührungsfingerabdrucks in den Berührungsinformationen;
Bestimmen (203) von Benutzerinformationen des Benutzers gemäß dem Berührungsfingerabdruck;
Erhalten (204) eines Batteriezustandsangleichniveaus, das den Benutzerinformationen entspricht;
Bestimmen (205) einer dritten Zustandsangleichsunterinformation gemäß dem Batteriezustandsangleichniveau, wobei die dritte Zustandsangleichunterinformation ein Berechtigungsangleichsparameter ist, der dem Benutzer gehört;
Erhalten (206) von Berührungsdauer und Berührungsfrequenz in den Berührungsinformationen;
Bestimmen (207) einer vierten Zustandsangleichsunterinformation gemäß der Berührungsdauer und der Berührungsfrequenz;
Bestimmen (208) eines Schnittpunkts der dritten Zustandsangleichsunterinformation und der vierten Zustandsangleichsunterinformation als Zustandsangleichsinformation der Energiespeicherbatterie;
Durchführen (209) einer Zustandsangleichung an der Energiespeicherbatterie gemäß den Zustandsangleichsinformationen, um einen angeglichenen Zielzustand zu erhalten; und
Anzeigen (210) des Zielzustands durch ein Anzeigemodul in der elektronischen Einrichtung.

5. Terminal nach Anspruch 4, wobei das Anzeigemodul eine Zustandsanzeigelampe umfasst, und hinsichtlich der Anzeige des Zielzustands durch das Anzeigemodul in der elektronischen Einrichtung ist der Prozessor ferner so konfiguriert, dass er die Programmanweisungen aufruft, um Folgendes auszuführen:
Bestimmen der Anzeigefarbe der Zustandsanzeigelampe und der Blinkfrequenz der Zustandsanzeigelampe gemäß dem Zielzustand; und
Steuern der Statusanzeigelampe gemäß der Anzeigefarbe und der Blinkfrequenz zur Anzeige des Zielzustands.

6. Terminal nach Anspruch 5, wobei der Prozessor ferner so konfiguriert ist, dass er die Programmanweisungen aufruft, um Folgendes auszuführen:
Erhalten von Nutzungsinformationen der Energiespeicherbatterie;
Bestimmen eines Zustandsparameters der Energiespeicherbatterie gemäß den Nutzungsinformationen;
Bestimmen eines Anzeigeparameters der Zustandsanzeigelampe gemäß dem Zustandsparameter; und
Angleichen der Zustandsanzeigelampe gemäß dem Anzeigeparameter, um den Zustandsparameter der Energiespeicherbatterie anzuzeigen.

7. Computerlesbares Speichermedium, wobei das computerlesbare Speichermedium ein Computerprogramm speichert, das Computerprogramm Programmanweisungen umfasst und die Programmanweisungen, wenn sie von einem Prozessor ausgeführt werden, den Prozessor dazu veranlassen, Folgendes auszuführen:
Empfangen (201) von Berührungsinformationen, die von einem Benutzer über eine Batteriezustandsangleichstaste eingegeben werden;
Erhalten (202) eines Berührungsfingerabdrucks in den Berührungsinformationen;
Bestimmen (203) von Benutzerinformationen des Benutzers gemäß dem Berührungsfingerabdruck;
Erhalten (204) eines Batteriezustandsangleichniveaus, das den Benutzerinformationen entspricht;
Bestimmen (205) einer dritten Zustandsangleichsunterinformation gemäß dem Batteriezustandsangleichniveau, wobei die dritte Zustandsangleichunterinformation ein Berechtigungsangleichsparameter ist, der dem Benutzer gehört;
Erhalten (206) von Berührungsdauer und Berührungsfrequenz in den Berührungsinformationen;
Bestimmen (207) einer vierten Zustandsangleichsunterinformation gemäß der Berührungsdauer und der Berührungsfrequenz;
Bestimmen (208) eines Schnittpunkts der dritten Zustandsangleichsunterinformation und der vierten Zustandsangleichsunterinformation als Zustandsangleichsinformation der Energiespeicherbatterie;
Durchführen (209) einer Zustandsangleichung an der Energiespeicherbatterie gemäß den Zustandsangleichsinformationen, um einen angeglichenen Zielzustand zu erhalten; und
Anzeigen (210) des Zielzustands durch ein Anzeigemodul in der elektronischen Einrichtung.

8. Computerlesbares Speichermedium nach Anspruch 7, wobei das Anzeigemodul eine Zustandsanzeigelampe umfasst und hinsichtlich der Anzeige des Zielzustands durch das Anzeigemodul in der elektronischen Einrichtung die Programmanweisungen, wenn sie von dem Prozessor ausgeführt werden, den Prozessor ferner dazu veranlassen, Folgendes auszuführen:
Bestimmen der Anzeigefarbe der Zustandsanzeigelampe und der Blinkfrequenz der Zustandsanzeigelampe gemäß dem Zielzustand; und
Steuern der Statusanzeigelampe gemäß der Anzeigefarbe und der Blinkfrequenz zur Anzeige des Zielzustands.

9. Computerlesbares Speichermedium nach Anspruch 8, wobei die Programmanweisungen, wenn sie von dem Prozessor ausgeführt werden, den Prozessor ferner dazu veranlassen, Folgendes auszuführen:
Erhalten von Nutzungsinformationen der Energiespeicherbatterie;
Bestimmen eines Zustandsparameters der Energiespeicherbatterie gemäß den Nutzungsinformationen;
Bestimmen eines Anzeigeparameters der Zustandsanzeigelampe gemäß dem Zustandsparameter; und
Angleichen der Zustandsanzeigelampe gemäß dem Anzeigeparameter, um den Zustandsparameter der Energiespeicherbatterie anzuzeigen.

## Revendications

1. Procédé de réglage d'un état d'une batterie de stockage d'énergie, dans lequel le procédé est appliqué à un appareil électronique, l'appareil électronique comporte un bouton de réglage d'état de batterie, et le procédé comporte :
la réception (201) d'informations tactiles saisies par un utilisateur, par l'intermédiaire du bouton de réglage d'état de batterie ;
l'obtention (202) d'une empreinte tactile dans les informations tactiles ;
la détermination (203) d'informations utilisateur de l'utilisateur selon l'empreinte tactile ;
l'obtention (204) d'un niveau de réglage d'état de batterie correspondant aux informations utilisateur ;
la détermination (205) de troisièmes sous-informations de réglage d'état selon le niveau de réglage d'état de batterie, dans lequel les troisièmes sous-informations de réglage d'état sont un paramètre de réglage d'autorisation détenu par l'utilisateur ;
l'obtention (206) d'une durée de contact et d'une fréquence de contact dans les informations tactiles ;
la détermination (207) de quatrièmes sous-informations de réglage d'état en fonction de la durée de contact et de la fréquence de contact ;
la détermination (208) d'un croisement des troisièmes sous-informations de réglage d'état et des quatrièmes sous-informations de réglage d'état en tant qu'informations de réglage d'état de la batterie de stockage d'énergie ;
la réalisation (209) d'un réglage d'état sur la batterie de stockage d'énergie selon les informations de réglage d'état pour obtenir un état cible réglé ; et
l'affichage (210) de l'état cible par un module d'affichage dans l'appareil électronique.

2. Procédé selon la revendication 1, dans lequel le module d'affichage comporte un témoin d'affichage d'état, et l'affichage (210) de l'état cible par le module d'affichage dans l'appareil électronique comporte :
la détermination d'une couleur d'affichage du témoin d'affichage d'état et d'une fréquence de clignotement du témoin d'affichage d'état en fonction de l'état cible ; et
la commande du témoin d'affichage d'état en fonction de la couleur d'affichage et de la fréquence de clignotement pour afficher l'état cible.

3. Procédé selon la revendication 2, comportant en outre :
l'obtention d'informations d'utilisation de la batterie de stockage d'énergie ;
la détermination d'un paramètre d'état de la batterie de stockage d'énergie selon les informations d'utilisation ;
la détermination d'un paramètre d'affichage du témoin d'affichage d'état selon le paramètre d'état ; et
le réglage du témoin d'affichage d'état selon le paramètre d'affichage pour indiquer le paramètre d'état de la batterie de stockage d'énergie.

4. Terminal comportant un processeur, un dispositif d'entrée, un dispositif de sortie et une mémoire, le processeur, le dispositif d'entrée, le dispositif de sortie et la mémoire étant connectés entre eux, dans lequel la mémoire est configurée pour stocker un programme informatique, le programme informatique comporte des instructions de programme, et le processeur est configuré pour invoquer les instructions de programme pour exécuter :
la réception (201) d'informations tactiles saisies par un utilisateur par l'intermédiaire d'un bouton de réglage d'état de batterie ;
l'obtention (202) d'une empreinte tactile dans les informations tactiles ;
la détermination (203) d'informations utilisateur de l'utilisateur selon l'empreinte tactile ;
l'obtention (204) d'un niveau de réglage d'état de batterie correspondant aux informations utilisateur ;
la détermination (205) de troisièmes sous-informations de réglage d'état selon le niveau de réglage d'état de batterie, dans lequel les troisièmes sous-informations de réglage d'état sont un paramètre de réglage d'autorisation détenu par l'utilisateur ;
l'obtention (206) d'une durée de contact et d'une fréquence de contact dans les informations tactiles ;
la détermination (207) de quatrièmes sous-informations de réglage d'état en fonction de la durée de contact et de la fréquence de contact ;
la détermination (208) d'un croisement des troisièmes sous-informations de réglage d'état et des quatrièmes sous-informations de réglage d'état en tant qu'informations de réglage d'état de la batterie de stockage d'énergie ;
la réalisation (209) d'un réglage d'état sur la batterie de stockage d'énergie selon les informations de réglage d'état pour obtenir un état cible réglé ; et
l'affichage (210) de l'état cible par un module d'affichage dans l'appareil électronique.

5. Terminal selon la revendication 4, dans lequel le module d'affichage comporte un témoin d'affichage d'état, et concernant l'affichage de l'état cible par le module d'affichage dans l'appareil électronique, le processeur est en outre configuré pour invoquer les instructions de programme pour exécuter :
la détermination d'une couleur d'affichage du témoin d'affichage d'état et d'une fréquence de clignotement du témoin d'affichage d'état en fonction de l'état cible ; et
la commande du témoin d'affichage d'état en fonction de la couleur d'affichage et de la fréquence de clignotement pour afficher l'état cible.

6. Terminal selon la revendication 5, le processeur est en outre configuré pour invoquer les instructions de programme pour exécuter :
l'obtention d'informations d'utilisation de la batterie de stockage d'énergie ;
la détermination d'un paramètre d'état de la batterie de stockage d'énergie selon les informations d'utilisation ;
la détermination d'un paramètre d'affichage du témoin d'affichage d'état selon le paramètre d'état ; et
le réglage du témoin d'affichage d'état selon le paramètre d'affichage pour indiquer le paramètre d'état de la batterie de stockage d'énergie.

7. Support de stockage lisible par ordinateur, dans lequel le support de stockage lisible par ordinateur stocke un programme informatique, le programme informatique comporte des instructions de programme, et les instructions de programme, lorsqu'elles sont exécutées par un processeur, amènent le processeur à exécuter :
la réception (201) d'informations tactiles saisies par un utilisateur par l'intermédiaire d'un bouton de réglage d'état de batterie ;
l'obtention (202) d'une empreinte tactile dans les informations tactiles ;
la détermination (203) d'informations utilisateur de l'utilisateur selon l'empreinte tactile ;
l'obtention (204) d'un niveau de réglage d'état de batterie correspondant aux informations utilisateur ;
la détermination (205) de troisièmes sous-informations de réglage d'état selon le niveau de réglage d'état de batterie, dans lequel les troisièmes sous-informations de réglage d'état sont un paramètre de réglage d'autorisation détenu par l'utilisateur ;
l'obtention (206) d'une durée de contact et d'une fréquence de contact dans les informations tactiles ;
la détermination (207) de quatrièmes sous-informations de réglage d'état en fonction de la durée de contact et de la fréquence de contact ;
la détermination (208) d'un croisement des troisièmes sous-informations de réglage d'état et des quatrièmes sous-informations de réglage d'état en tant qu'informations de réglage d'état de la batterie de stockage d'énergie ;
la réalisation (209) d'un réglage d'état sur la batterie de stockage d'énergie selon les informations de réglage d'état pour obtenir un état cible réglé ; et
l'affichage (210) de l'état cible par un module d'affichage dans l'appareil électronique.

8. Support de stockage lisible par ordinateur selon la revendication 7, dans lequel le module d'affichage comporte un témoin d'affichage d'état, et concernant l'affichage de l'état cible par le module d'affichage dans l'appareil électronique, les instructions de programme, lorsqu'elles sont exécutées par le processeur, amènent en outre le processeur à exécuter :
la détermination d'une couleur d'affichage du témoin d'affichage d'état et d'une fréquence de clignotement du témoin d'affichage d'état en fonction de l'état cible ; et
la commande du témoin d'affichage d'état en fonction de la couleur d'affichage et de la fréquence de clignotement pour afficher l'état cible.

9. Support de stockage lisible par ordinateur selon la revendication 8, les instructions de programme, lorsqu'elles sont exécutées par le processeur, amènent en outre le processeur à exécuter :
l'obtention d'informations d'utilisation de la batterie de stockage d'énergie ;
la détermination d'un paramètre d'état de la batterie de stockage d'énergie selon les informations d'utilisation ;
la détermination d'un paramètre d'affichage du témoin d'affichage d'état selon le paramètre d'état ; et
le réglage du témoin d'affichage d'état selon le paramètre d'affichage pour indiquer le paramètre d'état de la batterie de stockage d'énergie.
